# EUROPÄISCHE PATENTSCHRIFT

(11) **EP 0 653 333 B1**
(45) Veröffentlichungstag und Bekanntmachung des Hinweises auf die Patenterteilung: **08.03.2000**
(21) Anmeldenummer: 94113839.8
(22) Anmeldetag: 03.09.1994
(51) Int. Cl.: B60R 16/02, G08C 25/00

(54) **Anordnung mit wenigstens zwei über Schnittstellen verbindbaren Teilnehmern**
Device with at least two terminals connectable via interfaces
Dispositif avec au moins deux terminaux connectables par interfaces

(30) Priorität: 12.11.1993 DE 4338707
(43) Veröffentlichungstag der Anmeldung: 17.05.1995
(73) Patentinhaber: ROBERT BOSCH GMBH, 70442 Stuttgart (DE)
(72) Erfinder: Knecht, Gerhard, Dipl.-Ing. (FH), D-76473 Iffezheim (DE)

(56) Entgegenhaltungen:
- EP-A- 0 424 907
- EP-A- 0 458 781
- DE-A- 4 309 316
- US-A- 4 264 893
- US-A- 5 110 189

## Beschreibung

### Stand der Technik

Die Erfindung geht aus von einer Anordnung mit wenigstens zwei über Schnittstellen verbindbaren Teilnehmern nach der Gattung des Hauptanspruchs, wie sie biespielsweise aus der DE-A- 43 09 316 hervorgeht. Die den einzelnen Teilnehmern zugeordneten Schnittstellen sind mit wenigstens einer Datenleitung, die einen Informationsaustausch zwischen den Teilnehmern ermöglicht, miteinander verbunden. Die Teilnehmer sind beispielsweise im Rahmen eines Multiplexsystems vorgesehen, das in einem Kraftfahrzeug einsetzbar ist.

Aus der EP-A-0 458 781, die ein weiteres derartiges Multiplexsystem beschreibt, sind Notlaufmaßnahmen bekannt, die beim Auftreten eines Fehlers in der Schnittstelle eines Teilnehmers oder auf der Datenleitung ergriffen werden. In Abhängigkeit von der Fehlerart können beispielsweise die Bedeutung der auf der Datenleitung auftretenden Pegel geändert werden. Sofern zwei Datenleitungen vorhanden sind, kann anstelle einer Auswertung der Signalpegel auf beiden Datenleitungen zu einen Informationsaustausch über eine intakte Datenleitung übergegangen werden. Ein tiefgreifenderer Fehler, beispielsweise ein Kurzschluß sämtlicher Datenleitungen gegen Masse, kann nicht mehr abgefangen werden. Ein Betreiben der Anordnung ist in diesem Fall nicht mehr möglich. Ein derartig tiefgreifender Fehler kann beispielsweise bei einem Multiplexsystem auftreten, das in einem Kraftfahrzeug angeordnet ist, wenn das Kraftfahrzeug einen Unfall erlitten hat. Es kann die Gefahr bestehen, daß sicherheitsrelevante Teilnehmer nicht mehr ordnungsgemäß ihre Funktion erfüllen.

Der Erfindung liegt die Aufgabe zugrunde, eine Anordnung mit wenigstens zwei über Schnittstellen verbindbaren Teilnehmern anzugeben, die ein hohes Maß an Betriebssicherheit aufweist.

Die Aufgabe wird durch die im Hauptanspruch angegebenen Merkmale gelöst.

### Vorteile der Erfindung

Die erfindungsgemäße Anordnung weist den Vorteil auf, daß über wenigstens eine vorgesehene Redundanzleitung vorzugsweise sicherheitsrelevante Funktionen in einem Teilnehmer von einem anderen Teilnehmer aus betätigbar sind. Mit nur geringem Mehraufwand gegenüber der ohnehin erforderlichen Verkabelung mit Lichtleitern oder elektrischen Leitern zwischen den einzelnen Teilnehmern ist eine erhebliche Erhöhung der Sicherheit erreichbar.

Die erfindungsgemäße Anordnung ist insbesondere geeignet zur Verwendung bei einem in einem Kraftfahrzeug angeordneten Multiplexsystem, das sicherheitsrelevante Teilnehmer enthält. Ein derartiger Teilnehmer ist beispielsweise ein Fensterheberantrieb. Erleidet das Kraftfahrzeug einen Unfall, bei dem das Fahrzeug in Wasser eintaucht, so können die Türen wegen des Drucks nicht mehr geöffnet werden. Ein Verlassen des Kraftfahrzeugs oder das gezielte Eindringen von Wasser ist zunächst über die Seitenfenster möglich. Ein Totalausfall des Multiplexsystems würde in dieser Situation ein Öffnen des Seitenfensters unmöglich machen. Über die das Multiplexsystem umgehende Redundanzleitung ist nunmehr weiterhin ein Öffnen der Seitenfenster möglich.

Vorteilhafte Weiterbildungen und Ausgestaltungen der erfindungsgemäßen Anordnung ergeben sich aus den Unteransprüchen.

Eine vorteilhafte Ausgestaltung sieht vor, daß die Redundanzleitung als Lichtwellenleiter augebildet ist. Ein solcher Lichtwellenleiter ist unempfindlich gegenüber elektromagnetischer Störstrahlung.

In einer anderen Ausgestaltung ist vorgesehen, daß die Redundanzleitung als elektrische Leitung realisiert ist. Der wesentliche Vorteil dieser Ausgestaltung liegt darin, daß über die Redundanzleitung unmittelbar eine Bestromung eines Schalttransistors oder beispielsweise eines Relais möglich ist. Sofern gleichzeitig als Eingabeelement ein einfacher elektrischer Schalter vorgesehen ist, kann die sicherheitsrelevante Funktion ohne weitere Beteiligung von möglicherweise zerstörten elektronischen Komponenten ausgelöst werden, wobei lediglich vorauszusetzen ist, daß die Energieversorgung noch zumindest kurzzeitig möglich ist.

Weitere vorteilhafte Weiterbildungen und Ausgestaltungen ergeben sich aus weiteren Unteransprüchen in Verbindung mit der folgenden Beschreibung.

### Beschreibung der Ausführungsbeispiele

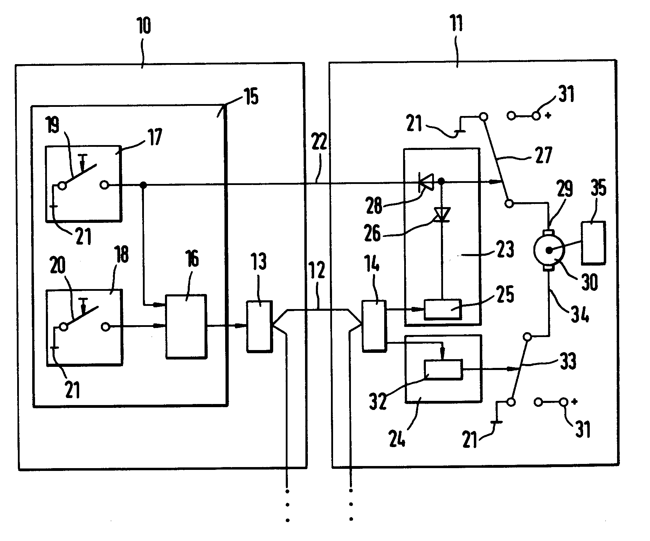

In der Figur ist ein Blockschaltbild einer erfindungsgemäßen Anordnung mit wenigstens zwei über Schnittstellen verbindbaren Teilnehmern gezeigt.

Die Figur zeigt einen ersten und zweiten Teilnehmer 10, 11, die über eine Datenleitung 12 miteinander verbunden sind. Die Datenleitung 12 führt gegebenenfalls zu weiteren, in der Figur nicht gezeigten Teilnehmern. Die Weiterführung der Datenleitung 12 ist in der Figur deshalb jeweils mit Punkten angedeutet. Die Datenleitung 12 ist jeweils an Schnittstellen 13, 14 angeschlossen. Eine erste Schnittstelle 13 ist im ersten Teilnehmer 10 und eine zweite Schnittstelle 14 im zweiten Teilnehmer 11 angeordnet.

Die erste Schnittstelle 13 ist mit einer Eingabe 15 verbunden, die eine Eingabesignalaufbereitung 16 sowie ein erstes und zweites Eingabeelement 17, 18 enthält. Die Eingabeelemente 17, 18 sind jeweils als Tastschalter realisiert, die beim Betätigen eine Verbindung mit einer Masse 21 herstellen. Beide Eingabeelemente 17, 18 sind mit der Eingabesignalaufbereitung 16 verbunden. Das erste Eingabeelement 17 ist zusätzlich an eine Redundanzleitung 22 gelegt, die zwischen den beiden Teilnehmen 10, 11 angeordnet ist.

Die im zweiten Teilnehmer 11 angeordnete zweite Schnittstelle 14 ist mit einer ersten und zweiten Ausgabe 23, 24 verbunden. Die erste Ausgabe 23 enthält eine erste Endstufe 25, die über eine erste Diode 26 mit einem ersten Relais 27 zusammenwirkt. Eine zweite Diode 28 stellt eine Verbindung zwischen dem ersten Relais 27 und der Redundanzleitung 22 her. Ein Umschalter des ersten Relais 27 verbindet einen ersten Anschluß 29 eines Elektromotors 30 entweder mit Masse 21 oder mit einem positiven Pol 31 einer nicht näher gezeigten Energiequelle. Der Elektromotor 30 ist zum Betätigen eines Verstellantriebs 35 vorgesehen.

Die zweite Ausgabe 24 enthält eine zweite Endstufe 32, die ein zweites Relais 33 steuert. Ein Umschalter des zweiten Relais 33 verbindet einen zweiten Anschluß 34 des Elektromotors 30 entweder mit der Masse 21 oder mit dem positiven Pol 31.

Die erfindungsgemäße Anordnung mit den wenigstens zwei Teilnehmern 10, 11, die über die Schnittstellen 13, 14 miteinander verbunden sind, arbeitet folgendermaßen:

Die beiden Teilnehmer 10, 11 können einen Informationsaustausch über die Datenleitung 12 vornehmen. Anstelle der einzigen, in der Figur gezeigten Datenleitung 12 können auch mehrere Leitungen parallel vorgesehen sein. Während über die eine Datenleitung 12 Informationen ausschließlich seriell übertragen werden können, kann bei mehreren Datenleitungen eine parallele Übertragung stattfinden. Die beiden Teilnehmer 10, 11 sind beispielsweise in einem Multiplexsystem angeordnet, das zur Verknüpfung von mehreren Teilnehmern 10, 11 vorgesehen ist, die beispielsweise in einem Kraftfahrzeug an unterschiedlichen Orten untergebracht sind. Der erste Teilnehmer 10 kann beispielsweise eine Eingabevorrichtung für Komfortsysteme sein, die in einer Mittelkonsole des Kraftfahrzeugs eingebaut ist. Mit dem ersten Eingabeelement 17 der Eingabe 15 kann beispielsweise der Befehl "Seitenfenster öffnen" veranlaßt werden. Das erste Schaltelement 17, das beispielsweise als Tastschalter 19 realisiert ist, der eine Verbindung mit Masse 21 herstellt, gibt ein Signal an die Eingabesignalaufbereitung 16 ab, die gegebenenfalls vorgesehen ist. Die Eingabesignalaufbereitung 16 ordnet den Eingangssignalen beispielsweise bestimmte Bitkombinationen zu, die über die erste Schnittstelle 13 auf die Datenleitung 12 gegeben wird. Sowohl die erste Schnittstelle 13 als auch die zweite Schnittstelle 14 enthalten bekannte Leitungstreiberschaltungen sowie weitere aus dem eingangs erwähnten Stand der Technik bekannte Funktionsblöcke, die den Datenaustausch über die Datenleitung 12 ermöglichen.

In Abhängigkeit von den von der zweiten Schnittstelle 14 empfangenen Informationen können eine der beiden Ausgaben 23, 24 oder beide Ausgaben 23, 24 gleichzeitig angesteuert werden. Gegebenenfalls kann zwischen der zweiten Schnittstelle 14 und den beiden Ausgaben 23, 24 eine Ausgabesignalaufbereitung vorhanden sein, die der im ersten Teilnehmer 10 enthaltenen Eingangssignalaufbereitung 16 entspräche.

Bei dem in der Figur gezeigten Ausführungsbeispiel soll ein vom ersten Eingabeelement 17 veranlasster Befehl "Seitenfenster öffnen" im zweiten Teilnehmer 11, der in einer Kraftfahrzeugtür untergebracht ist, das erste Relais 27 betätigen. Eine Umschaltung des in Ruhestellung gezeigten Umschalters des ersten Relais 27, die ein Verbinden des ersten Anschlusses 29 des Elektromotors 30 mit dem positiven Pol 31 bewirkt, löst eine Betätigung des Verstellantriebs 35 aus, bei dem das entsprechende Seitenfenster geöffnet wird. Das Umschalten des ersten Relais 27 erfolgt über die erste Endstufe 25, die über die erste Diode 26 ein Steuersignal an das erste Relais 27 abgibt. Die erste Endstufe 25 ist beispielsweise mit einem Schalttransistor realisierbar, der eine in der Figur nicht gezeigte Relaiswicklung über die erste Diode 26 mit Masse 21 verbindet. Es ist ohne weiteres möglich, das Relais 27 durch ein die Schaltfunktion realisierendes Halbleiterbauelement zu ersetzen. Gegebenenfalls kann dann die erste Endstufe 25 entfallen.

Mit dem zweiten Eingabeelement 18 im ersten Teilnehmer 10 kann der Befehl "Seitenfenster schließen" abgegeben werden. Im zweiten Teilnehmer 11 wird daraufhin über die zweite Ausgabe 24, die eine der ersten Endstufe 25 entsprechende zweite Endstufe 32 enthält, das zweite Relais 33 betätigt werden. Der in der Ruhestellung gezeigte Schaltkontakt des zweiten Relais 33 verbindet dann den zweiten Anschluß 34 des Elektromotors 30 mit dem positiven Pol 31, so daß der Elektromotor 30 in entgegengesetzter Drehrichtung läuft, bei der das Seitenfenster geschlossen wird. Die zweite Endstufe 32 und das zweite Relais 33 können beispielsweise durch eine einzige Schaltfunktion eines Halbleiterbauelements ersetzt sein.

Eine Beschädigung der Datenleitung 12 oder ein Fehler beispielsweise in der ersten und/oder zweiten Schnittstelle 13, 14 oder ein Defekt in weiteren elektronischen Komponenten wie beispielsweise der Eingangssignalaufbereitung 16 oder der zweiten Endstufe 25 führen jeweils dazu, daß die sicherheitsrelevante Funktion "Seitenfenster öffnen" nicht mehr über die Datenleitung 12 übertragen werden kann. Erfindungsgemäß ist die Redundanzleitung 22 vorgesehen, die das im ersten Teilnehmer 10 angeordnete erste Eingabeelement 17 unmittelbar mit dem im zweiten Teilnehmer 11 angeordneten zweiten Relais 33 verbindet. Die beiden Dioden 26, 28 bilden eine ODER-Verknüpfung, die entweder das über die Redundanzleitung 22 übertragene Signal oder das von der ersten Endstufe 25 abgegebene Signal (oder beide Signale) zum ersten Relais 27 weiterleiten. Die beiden Dioden 26, 28 haben lediglich Entkopplungsfunktion. Die Redundanzleitung 22 ermöglicht das unmittelbare Ansteuern des ersten Relais 27 unter Umgehung der Datenleitung 12 sowie unter Umgehung von weiteren elektronischen Komponenten.

Im gezeigten Ausführungsbeispiel ist die Redundanzleitung 22 als elektrische Leitung realisiert. Der Vorteil dieser Maßnahme liegt darin, daß ein elektrischer Strom geführt werden kann, der unmittelbar das Betätigen des ersten Relais 27 ermöglicht. In einer anderen Ausgestaltung kann vorgesehen sein, daß die Datenleitung das zweite Relais 33 über die in der ersten Ausgabe 23 angeordnete erste Endstufe 25 betätigt. Auch in dieser Ausgestaltung kann bei der Realisierung der Redundanzleitung 22 als elektrische Leitung ein gegebenenfalls benötigter Treiberstrom der ersten Endstufe 25 zugeleitet werden.

In einem anderen Ausführungsbeispiel ist die Ausführung der Redundanzleitung 22 als Lichtwellenleiter vorgesehen. Der Vorteil dieser Realisierung liegt in der Sicherheit gegenüber elektromagnetischen Störungen, die einen Lichtwellenleiter nicht beeinflussen. In beiden Teilnehmern 10, 11 sind dann zusätzliche Komponenten erforderlich, die eine Aufbereitung und eine Umsetzung der optischen Signale vornehmen.

Das erste Eingabeelement 17 ist im gezeigten Ausführungsbeispiel sowohl mit der Redundanzleitung 22 als auch mit der Eingangssignalaufbereitung 16 verbunden. Der mit der ersten Eingabe 17 ausgelöste Befehl kann daher über die Datenleitung 12 und über die Redundanzleitung 22 gleichzeitig zur ersten Ausgabe 23 geführt werden. Die Übertragung über die Datenleitung 12 könnte daher entfallen. Eine Einbeziehung der Datenleitung 12 ist beispielsweise dann sinnvoll, wenn der mit der ersten Eingabe 17 ausgelöste Befehl weiteren, nicht gezeigten Teilnehmern gleichermaßen zugeführt werden muß, zu denen die Redundanzleitung 22 nicht führt.

## Patentansprüche

1. Anordnung mit wenigstens zwei über Schnittstellen (13, 14) verbindbaren Teilnehmern (10, 11), mit einem Teilnehmer (10), der wenigstens ein Eingabeelement (17, 18) enthält, das über die Schnittstellen (13, 14) und eine Datenleitung (12) wenigstens eine in einem anderen Teilnehmer (11) enthaltene Ausgabe (23, 24) anspricht, dadurch gekennzeichnet, daß das Eingabeelement (17) unter Umgehung der Schnittstellen (13, 14) und der Datenleitung (12) über eine Redundanzleitung (22) unmittelbar mit der Ausgabe (23) im anderen Teilnehmer (11) verbunden ist, derart, daß eine unmittelbare Ansteuerung einer sicherheitsrelevanten Funktion unter Umgehung der Datenleitung (12) ermöglicht ist, wobei die Ansteuerung über die Redundanzleitung (22) und die Datenleitung (12) voneinander entkoppelt ist.

2. Anordnung nach Anspruch 1, dadurch gekennzeichnet, daß die Redundanzleitung (22) ein Lichtwellenleiter ist.

3. Anordnung nach Anspruch 1, dadurch gekennzeichnet, daß die Redundanzleitung (22) eine elektrische Leitung ist.

4. Anordnung nach Anspruch 1, dadurch gekennzeichnet, daß das Eingabeelement (17) ein manuell betätigbarer Schalter (19) ist.

5. Anordnung nach Anspruch 1, dadurch gekennzeichnet, daß die Ausgabe (23) ein Relais (27) betätigt.

6. Anordnung nach Anspruch 1, dadurch gekennzeichnet, daß die Ausgabe (23) eine ODER-Verknüpfung (26, 28) enthält, die die über die Redundanzleitung (22) und die die beiden Teilnehmer (10, 11) verbindende Datenleitung (12) übertragene Information verknüpft.

7. Anordnung nach Anspruch 1, dadurch gekennzeichnet, daß der zweite Teilnehmer (11) einen, vorzugsweise in einem Kraftfahrzeug angeordneten, mit einem Elektromotor (30) betätigbaren Verstellantrieb (35) steuert.

8. Anordnung nach Anspruch 7, dadurch gekennzeichnet, daß das über die Redundanzleitung (22) übertragene Signal den Elektromotor (30) zum Drehen in einer bestimmten vorgegebenen Richtung veranlaßt.

9. Anordnung nach Anspruch 7 und 8, dadurch gekennzeichnet, daß der Verstellantrieb (35) ein Fensterheber ist und daß die vorgegebene Drehrichtung des Elektromotors (30) einem Öffnungsvorgang des Fensters entspricht.

## Claims

1. Arrangement having at least two subscribers (10, 11) which can be connected via interfaces (13, 14), having a subscriber (10) which contains at least one input element (17, 18) which, via the interfaces (13, 14) and a data line (12), addresses at least one output (23, 24) which is contained in another subscriber (11), characterized in that the input element (17) is connected directly to the output (23) in the other subscriber (11), bypassing the interfaces (13, 14) and the data line (12) via a redundant line (22), in such a manner that it is possible to actuate a safety-relevant function directly, bypassing the data line (12), in which case the actuation via the redundant line (22) and the data line (12) is mutually decoupled.

2. Arrangement according to Claim 1, characterized in that the redundant line (22) is an optical conductor.

3. Arrangement according to Claim 1, characterized in that the redundant line (22) is an electrical line.

4. Arrangement according to Claim 1, characterized in that the input element (17) is a manually operable switch (19).

5. Arrangement according to Claim 1, characterized in that the output (23) operates a relay (27).

6. Arrangement according to Claim 1, characterized in that the output (23) contains an OR logic device (26, 28), which logically links the information transmitted via the redundant line (22) and via the data line (12) which links the two subscribers (10, 11).

7. Arrangement according to Claim 1, characterized in that the second subscriber (11) controls a positioning drive (35) which is preferably arranged in a motor vehicle and can be operated by an electric motor (30).

8. Arrangement according to Claim 7, characterized in that the signal which is transmitted via the redundant line (22) causes the electric motor (30) to rotate in a specific, predetermined direction.

9. Arrangement according to Claims 7 and 8, characterized in that the positioning drive (35) is a window winder, and in that the predetermined rotation direction of the electric motor (30) corresponds to a process for opening the window.

## Revendications

1. Agencement comprenant au moins deux terminaux (10, 11), qui peuvent être reliés au moyen d'interfaces (13, 14), avec un terminal (10), qui contient au moins un élément d'entrée (17, 18), qui réagit par l'intermédiaire des interfaces (13, 14) et d'une ligne de données (12) sur au moins une sortie (23, 24) contenue dans un autre terminal (11),
caractérisé en ce que
l'élément d'entrée (17) est relié directement à la sortie (23) dans l'autre terminal (11) en contournant les interfaces (13, 14) et la ligne de données (12) au moyen d'une ligne de redondance (22), d'une manière telle qu'il soit possible d'avoir une commande directe d'une fonction affectant la sécurité en contournant la ligne de données (12), les commandes étant découplées l'une de l'autre au moyen de la ligne de redondance (22) et de la ligne de données (12).

2. Agencement selon la revendication 1,
caractérisé en ce que
la ligne de redondance (22) est une fibre optique.

3. Agencement selon la revendication 1,
caractérisé en ce que
la ligne de redondance (22) est une ligne électrique.

4. Agencement selon la revendication 1,
caractérisé en ce que
l'élément d'entrée (17) est un interrupteur (19), qui peut être actionné manuellement.

5. Agencement selon la revendication 1,
caractérisé en ce que
la sortie (23) actionne un relais (27).

6. Agencement selon la revendication 1,
caractérisé en ce que
la sortie (23) contient une combinaison OU (26, 28), qui combine les informations transmises par l'intermédiaire de la ligne de redondance (22) et de la ligne de données (12), qui relie les deux terminaux (10, 11).

7. Agencement selon la revendication 1,
caractérisé en ce que
le deuxième terminal (11) commande un mécanisme de réglage (35) qui peut être actionné par un moteur électrique (30), disposé de préférence dans un véhicule à moteur.

8. Agencement selon la revendication 1,
caractérisé en ce que
le signal transmis par l'intermédiaire de la ligne de redondance (22) amène le moteur électrique (30) à tourner dans un sens prédéfini déterminé.

9. Agencement selon la revendication 7 ou la revendication 8
caractérisé en ce que
- le mécanisme de réglage (35) est un lève-glace, et
- le sens de rotation prédéfini du moteur électrique (30) correspond à un processus d'ouverture de la fenêtre.
